(19) Europäisches Patentamt
European Patent Office
Office européen des brevets

(11) Publication number: 0 501 490 A2

(12) EUROPEAN PATENT APPLICATION

(21) Application number: 92103393.2

(22) Date of filing: 27.02.92

(51) Int. Cl.[5]: C08K 3/36, C08L 83/08, C08K 9/10, //C08G77/388

Priority 280291 IT MI91000517.

(30) Priority: 28.02.91

(43) Date of publication of application: 02.09.92 Bulletin 92/36

(84) Designated Contracting States: AT BE CH DE DK ES FR GB GR IT LI LU NL SE

(71) Applicant: ENICHEM SYNTHESIS S.p.A.
Via Ruggero Settimo 55
I-90139 Palermo(IT)

(72) Inventor: Costanzi, Silvestro, Dr.
14, Via Cavour
I-20090 Lodivecchio, Milan(IT)
Inventor: Mereu, Marco
21, Via di Vittorio
I-20077 Dresano, Milan(IT)

(74) Representative: Barz, Peter, Dr. et al
Patentanwälte Dipl.-Ing. G. Dannenberg Dr. P. Weinhold, Dr. D. Gudel Dipl.-Ing. S. Schubert, Dr. P. Barz Siegfriedstrasse 8
W-8000 München 40(DE)

(54) **Solid stabilizer composition.**

(57) Described is a solid composition in the form of sliding granules which comprises silica and a siloxane polymer having sterically hindered piperidine groups.

The composition is useful for stabilizing organic polymers towards ultraviolet radiation and heat.

EP 0 501 490 A2

The present invention relates to a solid composition in the form of sliding granules comprising silica and a siloxane polymer having sterically hindered piperidine groups. Said composition is useful for stabilizing organic polymers towards ultraviolet radiation and heat.

Furthermore, the present invention relates to polymeric compositions stabilized by said solid composition.

It is known that organic polymers undergo degradation over time, due to exposure to atmospheric agents and, over all, to ultraviolet radiation. It is also known that moreover they easily undergo degradation during the working and processing steps because of the high temperatures reached therein.

This degradation manifests itself in an impairment of the physical properties of said organic polymers, such as, e.g., ultimate tensile strength and flexibility, as well as in changes of the optical properties of articles manufactured therefrom.

In order to avoid or reduce said degradation it is conventional practice to introduce stabilizing agents in the organic polymer.

One class of stabilizers are polysiloxanes having sterically hindered piperidine groups which are described in IT-B-1218004.

The use of these stabilizers is, however, limited by the fact that they are in the form of viscous liquids.

In fact the market prefers the use of solid stabilizers especially because of their better handling properties.

The stabilizing polysiloxane compounds described in the above patent can be bound to a solid carrier (support), but only if they still have reactive Si-H groups. Moreover, the quantity of stabilizer which can be bound to the carrier is very limited.

US-A-4,946,880 and EP-A-162,524 describe the use of silylated derivatives of sterically hindered amines such as 2,2,6,6-tetramethyl piperidine which have reactive groups and are capable of affording stabilizing polysiloxane compounds by hydrolysis.

These reactive silylated derivatives can be bound to a solid carrier with hydroxyl groups on the surface thereof, such as e.g. silica.

The bond to the carrier is obtained by allowing the silica and the stabilizing compound to react in the presence of a solvent, under reflux, and the supported stabilizer is then recovered by filtration and drying.

However, when working in this way, it is only possible to bind small quantities of stabilizing compound to the solid carrier.

It has now been found that it is possible to overcome the drawbacks of the prior art by the use of a stabilizing solid composition in the form of sliding granules which contain silica and a stabilizing polysiloxane compound with sterically hindered piperidine groups, the latter being present in a high amount.

Accordingly the present invention provides a solid composition in the form of solid granules which is obtainable by mixing

(a) from 60 to 95% by weight of a liquid silicone polymer having an (average) molecular weight of from 1000 to 10,000 which can be represented by general formula (I):

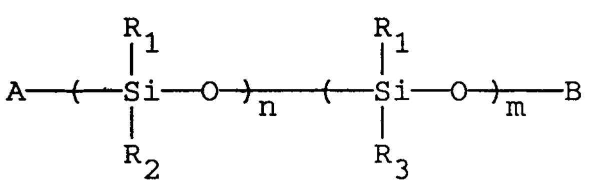

(I)

wherein

$R_1$ and $R_3$, the same or different from each other, are linear or branched $C_1$-$C_{10}$ (particularly $C_1$-$C_5$) alkyl radicals, cycloaliphatic radicals having from 5 to 11 (particularly from 5 to 8) carbon atoms and phenyl radicals (e.g. methyl, ethyl, propyl, cyclopentyl or cyclohexyl); $R_2$ is selected from radicals of general formula (II):

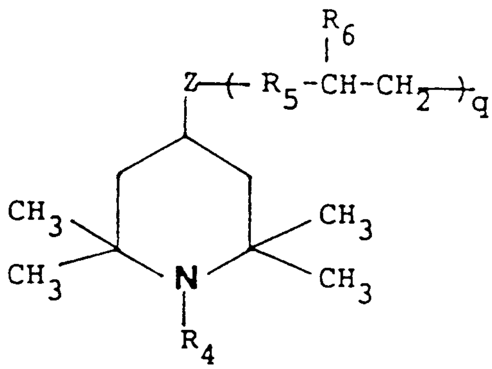

(II)

wherein
$R_4$ is hydrogen, methyl or benzyl (particularly hydrogen or methyl);
$R_5$ is a linear or branched $C_1$-$C_7$ (e.g. $C_2$-$C_4$) alkylene group;
$R_6$ is hydrogen or methyl;
Z is a group selected from -O- and

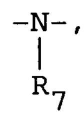

$R_7$ being a linear or branched $C_1$-$C_5$ (particularly $C_1$-$C_3$) alkyl group or hydrogen and preferably hydrogen, methyl or ethyl;
q is zero or 1;
n is an integer;
m is zero or an integer, with the proviso that (n + m) is an integer ≤50;
A is a group selected from

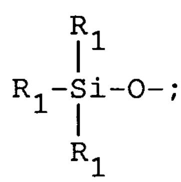

$-OR_8$; and -OH,
$R_1$ being defined as specified above and
$R_8$ being a $C_1$-$C_3$ alkyl group; (e.g. methyl or ethyl);
B is a group selected from

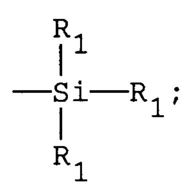

$-R_8$; and H,
$R_1$ and $R_8$ having the meanings specified above;
or A and B together represent a direct bond, thus giving rise to a cyclic structure;
(b) from 5 to 40% by weight of a silica having a specific surface area higher than or equal to 200 $m^2/g$ and an average particle size lower than or equal to 20 nm;

the mixing of components (a) and (b) being carried out by gradual addition of component (a) to component

(b), working at a temperature of from room temperature to 80°C and under stirring until sliding granules are obtained.

Silicone polymers of formula (I) used according to the present invention are known compounds and can be prepared as described in, e.g., IT-A-1,218,004; US-A-4,946,880 and EP-A-162,524. They can have a molecular weight or average molecular weight of from 1000 to 10000 and preferably of from 1000 to 4000. The quantity of silicone polymer present in the composition of the present invention preferably ranges from 65 to 95% by weight, depending on the molecular weight of the polymer and the type of silica used. In particular, the percentage of polymer present in the composition generally is the higher, the higher the molecular weight of the polymer is.

According to a preferred embodiment, the silica employed in the present invention has a specific surface area of from 200 to 500 $m^2/g$ and/or an average particle size of less than 20 nm.

Examples of silicas particularly suitable for the purpose of the present invention are those of the "fumed silica" type, such as for example the Aerosil® silicas (Degussa), in particular Aerosil® 200 and Aerosil® 380, and the Reolosil® silicas (Tokuyama), especially Reolosil® QS30 and Reolosil® QS40.

The mixing of the silicone polymer with the silica is carried out according to the present invention by gradually adding the liquid silicone to the silica which is kept under continuous stirring, for instance by using a reactor provided with a stirrer which scrapes both the bottom and the walls of said reactor.

This mixing operation can be carried out at a temperature of from room temperature (20-25°C) to 80°C and preferably it is carried out at room temperature.

The time necessary to add the liquid polymer to the silica is not particularly critical for the obtainment of the granules of the present invention, but it affects the average size of the granules. In fact, the slower the addition is, the smaller the obtained granules are.

In practice, the addition time of the liquid polymer generally varies from 30 minutes to 4 hours and preferably ranges from 30 minutes to 2 hours.

After the formation of the granules has been completed, it is advisable to discontinue the stirring of the mixture to avoid the risk of a cementation of the granules.

These granules, obtained as described above, are free of powders and are sliding. They are usually stable up to temperatures of from 120 to 140°C and do not agglomerate when they are subjected to a slight pressure at room temperature.

According to microscopic analysis these granules consist of a sheath of cemented silica which includes the liquid silicone polymer. In contrast to the supported stabilizers described above, the liquid silicone polymer contained in the granules can completely be recovered in unchanged from by a simple extraction with an organic solvent, such as for instance petroleum ether, heptane or dichloromethane.

By carring out the mixing of the silicone polymer and the silica as described above, the formation of a fraction of granules having sizes larger than the desired ones may occur. In this case, it is suitable to subject the granules to crushing until the sizes of the granules are within the preferred range of from 0.2 to 1 mm.

Said crushing can be performed, according to a preferred embodiment of the invention, in the same reactor wherein the mixing has been carried out, using a (second) stirrer which works at a high rotational speed.

The solid composition of the present invention can be used for stabilizing organic polymers of all kinds, to prevent the degrading action of ultraviolet radiation and heat.

Organic polymers particularly suitable for this purpose are homopolymers of olefins, such as for instance polypropylene, low and high density polyethylene, linear low density polyethylene, polybutadiene and polystyrene; copolymers and terpolymers containing olefinic, diolefinic, vinylic and/or acrylic monomer units, such as ethylene-propylene copolymers, styrene-butadiene copolymers, ethylene-propylene-norbornene terpolymers, ethylene-vinylacetate copolymers, styrene-acrylonitrile copolymers and acrylonitrile-butadiene-styrene terpolymers.

Preferably, the organic polymer is polypropylene, low or high density polyethylene, linear low density polyethylene or polybutadiene.

The quantity of stabilizing solid composition necessary to obtain a stabilized polymeric composition usually is the quantity which yields from 0.0005 to 0.27, and preferably from 0.003 to 0.05% by weight of active nitrogen wherein "active nitrogen" means the nitrogen of the piperidine ring.

In practice, the quantity of stabilizing solid composition which is added to the organic polymer usually ranges from 0.05 to 5% by weight and preferably from 0.1 to 1%, based on the polymer. The stabilizing composition of the present invention can be introduced in the organic polymer to be stabilized by conventional techniques used to incorporate additives.

Furthermore, the organic polymer to be stabilized can additionally contain other stabilizers and additives

generally used in the art, such as for example phenolic antioxidants, phosphite stabilizers, UV absorbers and peroxide- and hydroperoxide-decomposing agents.

Organic polymers stabilized by the granular solid composition of the present invention can be used for preparing both transparent and opaque manufactured articles by commonly used transformation processes of plastic materials, such as extrusion, injection molding and compression molding.

The use of the stabilizing composition of the present invention is advantageous in comparison with the use of the liquid stabilizer as such.

This solid composition can in fact be handled more easily and, furthermore, it has experimentally been observed that in many cases its use allows to achieve a better performance, with the same percentage of active nitrogen, than the use of the stabilizing siloxane compound as such. Correspondingly the same stabilizing level can be achieved with a lower percentage of active nitrogen.

The following examples are to further illustrate the present invention without limiting the scope thereof.

EXAMPLE 1

500 g of fumed silica (Aerosil® 380) having a specific surface area of 380 $m^2/g$ and an average particle size of 7 nm are introduced in a steel reactor provided with a stirrer scraping the bottom of the reactor and a crusher.

After having started the stirrer, 93 g of tetramethyl-propyl-3-oxy-[4-(2,2,6,6-tetramethyl)piperidinyl]-cyclotetrasiloxane having a molecular weight of 1029 (in formula (I): m = O; n = 4; $R_1$ = $CH_3$; $R_2$ = radical of formula (II) wherein Z = -O-; $R_4$ = H; $R_5$ = $CH_2$; $R_6$ = H, A and B being a direct bond) are gradually added over 2 hours at room temperature.

After the addition is complete, the mixture is stirred for a further 10 minutes, then the crusher is turned on for 5 minutes.

The product obtained consists of small sliding granules having a shape similar to rice grains and having sizes of from 0.2 to 0.5 nm.

The examination of these granules under the microscope shows a capsule consisting of silica containing the liquid silicone polymer inside.

One portion of the granules thus obtained is placed in an oven at 140 °C for 8 hours and neither morphologic changes nor breakdown phenomena of the structure can be observed thereafter.

Another portion of the granules is subjected to extraction in a Soxhlet apparatus for 8 hours, using hexane as extraction solvent.

The viscous liquid residue thus recovered is subjected to HPLC, NMR and mass spectrometry (DCI) analyses and a determination of the molecular weight and proves to have a structure identical with that of the starting tetramethyl-propyl-3-oxy-[4-(2,2,6,6-tetramethyl)piperidinyl]cyclotetrasiloxane.

According to quantitative analysis (by acidimetric titration) of the amine nitrogen said liquid residue represents about 99% by weight of said starting compound.

The granules obtained have the following composition: 35% by weight of silica; 65% by weight of silicone polymer.

EXAMPLE 2

The procedure described in example 1 is followed, using as liquid silicone polymer 2280 g of a linear polymethyl-propyl-3-oxy-[4-(2,2,6,6-tetramethyl)piperidinyl]siloxane having an average molecular weight of 4000 (in formula (I): m = 0; n = 15; $R_1$ = $CH_3$; $R_2$ = radical of formula (II) wherein Z = -O-; $R_4$ = H; $R_5$ = $CH_2$; $R_6$ = H; A = $-OSi(CH_3)_3$ and B = $-Si(CH_3)_3$).

The granules obtained have the following composition: 18% by weight of silica; 82% by weight of silicone polymer.

EXAMPLE 3

The procedure described in example 1 is followed, using as liquid silicone polymer 9500 g of a linear polymethyl-propyl-3-oxy-[4-(2,2,6,6-tetramethyl)piperidinyl]siloxane having an average molecular weight of 10000 (in formula I: m = 0; n = 39; $R_1$ = $CH_3$; $R_2$ = radical of formula (II) wherein Z = -O-; $R_4$ = H; $R_5$ = $CH_2$; $R_6$ = H; A = $-OSi(CH_3)_3$ and B = $-Si(CH_3)_3$).

The granules obtained have the following composition: 5% by weight of silica; 95% by weight of silicone polymer.

EXAMPLE 4

The procedure described in example 1 is followed, using as liquid silicone polymer 1353 g of a mixture of polysiloxanes having an average molecular weight of 2000 and consisting of 50% of tetramethylpropyl-3-oxy-[4-(2,2,6,6-tetramethyl)piperidinyl]cyclotetrasiloxane (molar weight 1029) and 50% of linear polymethylpropyl-3-oxy-[4-(2,2,6,6-tetramethyl)piperidinyl]siloxane having an average molecular weight of 2500 (in formula (I): m = O; n = 8-12; $R_1$ = $CH_3$; $R_2$ = radical of formula (II) wherein Z = -O-; $R_4$ = H; $R_5$ = $CH_2$; $R_6$ = H; A = OH; and B = H).

The granules obtained contain 73% by weight of polysiloxanes and 27% by weight of silica.

EXAMPLES 5 - 6

The procedure of example 1 is followed, varying the addition rate of the tetramethyl-propyl-3-oxy-[4-(2,2,6,6-tetramethyl)piperidinyl]cyclotetrasiloxane to the silica. In table 1 there are reported the sizes of granules obtained by carrying out the addition at different rates.

TABLE 1

| Ex. | addition rate (h) | sizes of granules (nm) |
|---|---|---|
| 1 | 2 | 0.2 - 0.5 |
| 5 | 1 | 1 - 1.5 |
| 6 | 0.5 | 2 - 4 |

EXAMPLE 7

Each of the products of examples 1-4 is mixed with commercial polypropylene (PP) in powder form (Moplen® FLF 20; Himont) in an amount of 0.25 parts by weight per 100 parts by weight of polypropylene.

There are also added two commercial antioxidants, ANOX® 20 and ALKANOX® 240, generally used as stabilizer in an amount of 0.05 parts by weight per 100 parts by weight of polypropylene.

As comparison a mixture of polypropylene with only the commercial antioxidants mentioned above (indicated in table 2 as "non activated PP") is prepared.

As another comparison a polypropylene containing the commercial antioxidants is added to 0.25 parts by weight of liquid tetramethyl-propyl-3-oxy-[4-(2,2,6,6-tetramethyl)piperidinyl]cyclotetrasiloxane (indicated in table 2 as PP + liq. stab.). The mixtures thus prepared are extruded by means of a laboratory extruder of the Brabender type under the following conditions: T: 125, 185, 200, 210, 220 °C
rotation speed of the screw: 20 rpm

The extruded strands are cut into granules and a portion of said granules is again extruded by means of the same extruder, under the same conditions as above, to obtain films having a thickness of 50 $\mu$m.

The films thus obtained are exposed to UV radiation, using a WOM apparatus of the type ATLAS CT 65 under the following conditions:
Temperature of the black panel: 60 °C
Relative humidity: 50%
Full light cycle
In table 2 the exposure times in the WOM necessary to obtain a 50% reduction of the ultimate tensile strength ($t_{50\%}$) are reported.

TABLE 2

| Polymeric film | % of silicone polymer in the granules | % active N | $t_{50\%}$ (h) |
|---|---|---|---|
| Non-activated PP | - | - | 150 |
| PP + liq. stab. | - | 0.0135 | 1300 |
| PP + prod. ex. 1 | 65 | 0.0088 | 970 |
| PP + prod. ex. 2 | 82 | 0.0108 | 1100 |
| PP + prod. ex. 3 | 95 | 0.0128 | 1350 |
| PP + prod. ex. 4 | 73 | 0.0098 | 1100 |

EXAMPLE 8

A portion of the polypropylene granules prepared as described in the preceding example is used for preparing plates of 1 mm thickness, by compression molding under the following conditions:
Temperature: 210 °C
Pre-heating time: 5 minutes
Pressing time: 5 minutes
Pressure: 100 kg/cm$^2$
The plates thus obtained are exposed to UV radiation using the same apparatus and the same conditions as in the preceding example.
In table 3 the residence times in the WOM necessary to obtain an incipient chalking of the plate are reported.

TABLE 3

| Plate | % of silicone polymer within the granules | % active N | chalking time (h) |
|---|---|---|---|
| PP without additive | - | - | 650 |
| PP + liq. stab. | - | 0.0135 | 6500 |
| PP + prod. ex. 1 | 65 | 0.0088 | 7000 |
| PP + prod. ex. 2 | 82 | 0.0108 | 4500 |
| PP + prod. ex. 3 | 95 | 0.0128 | 4000 |
| PP + prod. ex. 4 | 73 | 0.0098 | 6000 |

## Claims

**1.** Solid stabilizer composition in the form of sliding granules, obtainable by mixing:
(a) from 60 to 95% by weight of a liquid silicone polymer having an (average) molecular weight of from 1000 to 10,000 and represented by general formula (I):

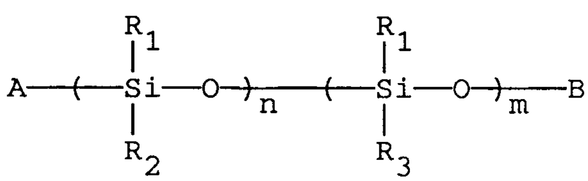

(I)

wherein
$R_1$ and $R_3$, the same or different from each other, are linear or branched $C_1$-$C_{10}$ alkyl, $C_5$-$C_{11}$ cycloalkyl or phenyl groups;
$R_2$ is a group of general formula (II):

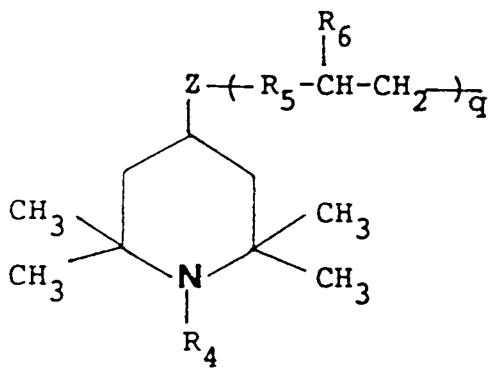

(II)

wherein
$R_4$ is hydrogen, methyl or benzyl ;
$R_5$ is a linear or branched $C_1$-$C_7$ alkylene group;
$R_6$ is hydrogen or methyl;
Z is a group selected from -O- and

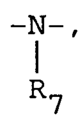

$R_7$ being a linear or branched $C_1$-$C_5$-alkyl group or hydrogen;
q is zero or 1;
n is an integer;
m is zero or an integer, with the proviso that (n + m) is an integer ≦50;
A is a group selected from

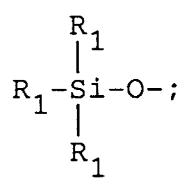

-$OR_8$; and -OH,
$R_1$ being defined as above and
$R_8$ being a $C_1$-$C_3$ alkyl group;
B is a group selected from

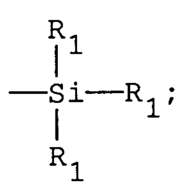

-$R_8$; and H,
$R_1$ and $R_8$ have the meanings given above;
or A and B together represent a direct bond, resulting in a cyclic structure;
(b) from 5 to 40% by weight of a silica having a specific surface area of at least 200 $m^2$/g and an average particle size of not more than 20 nm;

the mixing of components (a) and (b) being carried out by gradual addition of component (a) to component (b), at a temperature of from room temperature to 80 ° C and under stirring.

2. Composition according to claim 1, wherein the gradual addition of component (a) to component (b) has been carried out over 0.5 to 4 hours, particularly 0.5 to 2 hours.

3. Composition according to any one of claims 1 and 2, wherein the sliding granules have an average particle size of at least 0.2 mm, preferably of from 0.2 to 4 mm.

4. Composition according to any one of claims 1 to 3, wherein said sliding granules have been crushed to an average size of from 0.2 to 1 mm.

5. Composition according to any one of claims 1 to 4, wherein the liquid silicone polymer (a) has an (average) molecular weight of from 1000 to 4000.

6. Composition according to any one of claims 1 to 5, wherein the silica (b) has a specific surface area of from 200 to 500 $m^2/g$.

7. Composition according to any one of claims 1 to 6, which has been obtained by working at room temperature.

8. Stabilized polymeric composition, comprising an organic polymer and a solid composition according to any one of claims 1 to 7, in an amount such that it yields from 0.0005 to 0.27% by weight of active nitrogen, particularly 0.003 to 0.05% by weight of active nitrogen.

9. Composition according to claim 8, wherein the organic polymer is selected from homopolymers of olefins and copolymers and terpolymers containing olefinic and/or diolefinic and/or vinylic and/or acrylic monomer units and mixtures thereof.

10. Composition according to claim 9, wherein the organic polymer is selected from polypropylene, low density and high density polyethylene, linear low density polyethylene, polybutadiene and mixtures thereof.

11. Articles manufactured from a stabilized composition according to any one of claims 8 to 10.